# EUROPEAN PATENT APPLICATION

(11) **EP 4 693 566 A1**
(43) Date of publication of application: **11.02.2026**
(21) Application number: 24807590.5
(22) Date of filing: 17.05.2024
(51) Int. Cl.: H01M 10/0567, H01M 10/052, H01M 10/42, H01M 10/058, H01M 4/134, H01M 10/0585, H01M 4/02

(54) **ELECTROLYTE ADDITIVE COMPRISING METAL NITRATE, LITHIUM METAL BATTERY USING SAME, AND MANUFACTURING METHOD THEREFOR**

(30) Priority: 17.05.2023 KR 20230063582; 16.05.2024 KR 20240063612
(71) Applicant: Korea Advanced Institute of Science and Technology, Daejeon 34141 (KR); LG Energy Solution, Ltd., Seoul 07335 (KR)
(72) Inventor: CHO, Eunae, Daejeon 34141 (KR); KANG, Hyeonmuk, Daejeon 34141 (KR); SHIN, Geunhyeong, Daejeon 34141 (KR)
(74) Representative: Hoffmann Eitle
(86) International application number: PCT/KR2024/006694
(87) International publication number: WO 2024/237719

(57) **Abstract**

An embodiment of the present disclosure provides an interlayer produced from an electrolyte additive carrying with a large amount of metal nitrates by subjecting a polymer solution, wherein metal nitrates are dissolved, to an electrospinning method, and also further includes the interlayer in a lithium metal battery using a carbonate electrolyte to thereby provide a lithium metal battery having significantly superior electrochemical performance and stability compared to lithium metal batteries using conventional commercially available carbonate electrolytes.

## Description

### [TECHNICAL FIELD]

### Cross-Reference with Related Applications

This application claims the benefit of priority to Korean Patent Application No. 10-2023-0063582, filed on May 17, 2023, and Korean Patent Application No. 10-2024-0063612, filed on May 16, 2024, with the Korean Intellectual Property Office, the disclosures of which are incorporated herein by reference in their entirety.

The present disclosure relates to an electrolyte additive containing metal nitrate, a lithium metal battery using the same, and a manufacturing method thereof, and more particularly, to an electrolyte additive for producing an interlayer that induces uniform lithium deposition/desorption to enhance the stability of carbonate electrolyte for high-capacity lithium metal batteries, and at the same time, can form a stable solid electrolyte interphase(SEI), a lithium metal battery using the same, and a manufacturing method thereof.

### [BACKGROUND]

Lithium metal batteries are secondary batteries that use lithium metal as an anode material and are battery systems having high energy density. Lithium metal batteries have an operating voltage and theoretical capacity of 10 times or more (372 mAh/g vs. 20 3860 mAh/g) higher than the graphite anode used in conventional lithium ion batteries, thereby allowing them to store more energy.

However, lithium metal anodes pose a high risk of short circuits and fires, and thus improvement in stability is required for becoming commercially practical. Lithium causes a side reaction with the electrolyte and consumes the electrolyte to form a solid electrolyte interphase(SEI), and form a dendrite crystal when deposited on the electrode. The thick SEI generated during the charge/discharge process through the increase in surface area caused by the dendrite and the lithium desorbed from the electrode increase the overvoltage, which causes electrode degradation.

Metal oxide cathode materials are used for high capacity of lithium ion batteries, and carbonate electrolytes having a wide voltage window and being relatively inexpensive become commercially practical as electrolytes. However, carbonate electrolytes used in lithium metal batteries have low stability, and thus ether electrolytes having a narrow voltage window but being highly stable are used together with cathode materials having low operating voltages.

Recently, various electrolyte additive technologies have been developed to solve these problems, but most of them use highly concentrated ether electrolytes, which are expensive and still difficult to use at high voltages. This not only increases the price of the battery, but also makes it difficult to operate the full cell using various cathode materials.

Therefore, in order to achieve stable full-cell operation of a lithium metal battery, it is necessary to induce uniform lithium deposition/desorption and form a stable SEI by adding an additive to the carbonate electrolyte. However, in the case of conventional electrolyte additives, there are problems that they exhibit low solubility in carbonate solvents and electrolytes, and thus are exhausted early during the charging and discharging of the battery, which makes it difficult to form a stable SEI, and cannot sufficiently improve lifetime characteristics of the lithium metal battery.

### [DETAILED DESCRIPTION OF THE INVENTION]

### [Technical Problem]

It is an object of the present disclosure to provide an electrolyte additive for producing an interlayer that can increase the stability of carbonate electrolyte, induce uniform lithium deposition/desorption, and form a stable SEI, for high-capacity lithium metal batteries that can overcome the limited solubility of nitrates, a lithium metal battery using the same, and a manufacturing method thereof.

Technical objects obtainable from the present disclosure are not limited to the above mentioned technical objects, and additional other technical objects not mentioned herein can be clearly understood from the following description by those skilled in the art.

### [Technical Solution]

In order to achieve the above objects, according to an embodiment of the present disclosure, there is provided an electrolyte additive comprising: a polymer nanofiber structure; and a metal nitrate carried on the polymer nanofiber structure, wherein the metal nitrate comprises lithium nitrate or rubidium nitrate.

In an embodiment of the present disclosure, the polymer nanofiber structure may comprise at least one selected from the group consisting of polyvinylpyrrolidone(PVP), polyvinylidene fluoride(PVDF) and polyacrylonitrile(PAN).

In an embodiment of the present disclosure, the polymer nanofiber structure may have a fiber diameter of 100 to 500 nm.

In an embodiment of the present disclosure, the metal nitrate may be included in an amount of 10 to 70 wt.% based on the total weight of the electrolyte additive.

In order to achieve the above objects, according to another embodiment of the present disclosure, there is provided a lithium metal battery comprising: a lithium metal anode; a nanofiber-shaped interlayer positioned on the anode and produced from an electrolyte and the electrolyte additive; a separator positioned on the interlayer; and a cathode positioned on the separator.

In an embodiment of the present disclosure, on the interlayer, a solid electrolyte interphase(SEI) with improved ionic conductivity is formed by nitrate anions through decomposition of metal nitrate.

Furthermore, the interlayer may have a thickness of 10 to 40 µm.

In order to achieve the above objects, according to yet another embodiment of the present disclosure, there is provided a manufacturing method of a lithium metal battery, comprising the steps of: preparing an electrolyte additive which is a mixture of a polymer and a metal nitrate; preparing an interlayer from an electrolyte and the electrolyte additive; and disposing a lithium metal anode at a lower part of the interlayer and sequentially disposing a separator and a cathode on an upper part of the interlayer.

In an embodiment of the present disclosure, in the step of preparing an electrolyte additive, a mixing weight ratio of the metal nitrate and the polymer may be 1:2 to 3:1.

In an embodiment of the present disclosure, the step of preparing an interlayer may be carried out by an electrospinning method.

In an embodiment of the present disclosure, the electrospinning method may be carried out under application of a voltage of 8 kV to 25 kV.

### [Advantageous Effects]

According to an embodiment of the present disclosure, it is possible to produce an interlayer carrying with a large amount of metal nitrate by subjecting an electrolyte additive, which is a polymer solution wherein an electrolyte and a predetermined metal nitrate are dissolved, to an electrospinning method. Thereby, it is possible to provide a lithium metal battery having significantly superior electrochemical performance and stability compared to a lithium metal battery using a conventional commercially available carbonate electrolyte.

The lithium metal battery according to the present disclosure comprises an interlayer produced from an additive carrying with nitrate, so that anions can form a solid electrolyte interphase(SEI) composed of large amounts of inorganic compounds, and at the same time, cations can induce uniform lithium deposition through nucleation seeds or charge shielding effects.

The effects of the present disclosure are not limited to the effects mentioned above, and additional other effects not mentioned herein will be clearly understood by one of ordinary skill in the art from the detailed description and the appended claims.

### [BRIEF DESCRIPTION OF THE DRAWINGS]

FIG. 1 illustrates a schematic structure of a lithium metal battery including a PAN interlayer carried with metal nitrate according to an embodiment of the present disclosure.
FIG. 2 is a schematic diagram showing an example of a method for producing a PAN interlayer carrying with a metal nitrate according to an embodiment of the present disclosure and an electrospinning device applied thereto.
FIG. 3 is a schematic diagram of an expected effect when the produced interlayer is applied to a lithium metal battery.
FIG. 4 illustrates a scanning electron microscope(SEM) analysis image according to Example 1.
FIG. 5 illustrates a scanning electron microscope(SEM) analysis image according to Example 2.
FIG. 6 illustrates a SEM analysis image of an interlayer(CsPAN) formed from a PAN nanofiber layer carried with CsNO₃ according to Example 3.
FIG. 7 is a graph showing the coulombic efficiency versus cycle of a half-cell cell to evaluate lithium reversibility according to Comparative Examples and Examples.
FIG. 8 is an image obtained through scanning electron microscopy and focused ion beam (FIB) cross-sectional analysis to evaluate the deposition morphology of lithium electrodes according to Comparative Examples and Examples.
FIG. 9 is a result showing cycle versus capacity and coulombic efficiency for evaluating the overall battery performance according to Comparative Examples and Examples.

### [DETAILED DESCRIPTION OF THE EMBODIMENTS]

Hereinafter, various embodiments of the present disclosure will be described in detail with reference to the accompanying drawings. However, the present disclosure may be implemented in various different forms, and is not limited to the embodiments described herein. In order to clearly describe the present disclosure, descriptions of parts unrelated to the description of the present disclosure will be omitted in the drawing, and the same or similar components throughout the description will be denoted with the same reference numerals.

Throughout the specification, when a part is "connected (contacted, coupled)" to another part, this includes not only the case where these parts are "directly connected" but also the case where these parts are "indirectly connected" with another element being interposed therebetween. Further, when a part "includes" a certain component, it means that the part may further include other components, without excluding other components, unless otherwise stated.

The terms used herein are for the purpose of describing specific embodiments only and is not intended to limit the scope of the invention. The singular forms "a," "an" and "the" used herein are intended to include plural forms, unless the context clearly indicates otherwise. **It** should be understood that the terms "comprise," "include", "have", etc. are used herein to specify the presence of stated feature, integer, step, action, element, component or a combination thereof, but do not preclude the presence or addition of other feature, integer, step, action, element, component or a combination thereof.

Now, the embodiments of the present disclosure will be described in detail with reference to the accompanying drawings.

"LiPAN" means an interlayer formed from a PAN nanofiber layer carried with lithium nitrate (LiNO₃).

"RbPAN" means an interlayer formed from a PAN nanofiber layer carried with rubidium nitrate (RbNO₃).

An electrolyte additive according to an embodiment of the present disclosure comprises a polymer nanofiber structure; and a metal nitrate carried on the polymer nanofiber structure, wherein the metal nitrate may comprise lithium nitrate or rubidium nitrate. Since the polymer interlayer produced from the electrolyte additive is located between the lithium anode and the separator in the lithium metal battery, the metal nitrate carried on the polymer nanofiber structure easily reacts with the lithium anode and acts as an additive.

The polymer nanofiber structure may include a polymer selected from the group consisting of polyvinylpyrrolidone(PVP), polyvinylidene fluoride(PVDF), and polyacrylonitrile(PAN), wherein these polymers may be subjected to electrospinning to form a polymer nanofiber structure having a fibrous shape.

In such a polymer nanofiber structure, each fiber may have a fiber diameter of, for example, 100 to 500 nm, or 150 to 450 nm, and such nanofibers may have a morphology in which they are entangled with each other.

The metal nitrate may be contained in an amount of 10 to 70 wt.% based on the total weight of the interlayer or the electrolyte additive.

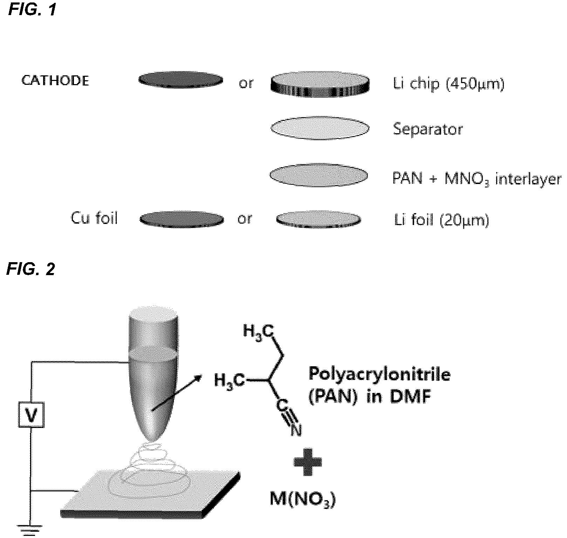

FIG. 1 illustrates a schematic structure of a lithium metal battery including a PAN interlayer carried with metal nitrate according to an embodiment of the present disclosure.

A lithium metal battery according to another embodiment of the present disclosure will be described with reference to FIG. 1.

A lithium metal battery according to an embodiment of the present disclosure may comprise: a lithium metal anode; a nanofiber-shaped interlayer positioned on the anode and produced from an electrolyte and the electrolyte additive; a separator positioned on the interlayer; and a cathode positioned on the separator.

FIG. 2 is a schematic diagram showing an example of a method for producing a PAN interlayer carrying with a metal nitrate according to an embodiment of the present disclosure and an electrospinning device applied thereto.

A manufacturing method of a lithium metal battery according to yet another embodiment of the present disclosure will be described with reference to FIG. 2.

A manufacturing method of a lithium metal battery according to an embodiment of the present disclosure may comprise a step of preparing an electrolyte additive which is a mixture of a polymer and a metal nitrate; a step of preparing an interlayer from an electrolyte and the electrolyte additive; and a step of disposing a lithium metal anode at a lower part of the interlayer and sequentially disposing a separator and a cathode on an upper part of the interlayer.

A first step is a step of preparing an electrolyte additive which is a mixture of a polymer and a metal nitrate. A metal nitrate and the polymer, for example, a polymer selected from the group including polyvinylpyrrolidone(PVP), polyvinylidene fluoride(PVDF), or polyacrylonitrile(PAN) are dissolved and dispersed in a solvent to prepare a mixture. At this time, DMF (dimethyl formamide) may be used as the solvent.

The step of preparing the electrolyte additive may be carried out under an inert gas atmosphere. This is intended to prevent moisture from being contained in the mixture during the process of dissolving and dispersing the metal nitrate and the polymer in the solvent.

In the step of preparing the electrolyte additive, the mixing ratio of the metal nitrate and the polymer may be 1:2 to 3:1.

The next step is a step of preparing an interlayer. The step of preparing the interlayer can be carried out through an electrospinning method. Through this electrospinning method, a polymer nanofiber structure can be obtained from the polymer.

The electrospinning method is a method for producing nanofibers in which a polymer is dissolved or melted and extruded through a spinneret, and can produce thin nanofibers that have a large surface area per unit weight and are highly porous. The interlayer according to an embodiment of the present disclosure can be obtained in the form of a polymer nanofiber structure by modifying a PAN polymer dissolved in a solvent into the form of nanofibers using an electrospinning method. The surface area of the metal nitrate can be increased depending on the degree of dispersion.

When the electrospinning method is carried out, the applied voltage range may be 8 kV to 25 kV. If the voltage range is lower than 8 kV, electrospinning may not occur, and if the voltage range is higher than 25 kV, it may not be spun in the form of nanofibers. However, the voltage range is not limited thereto, and may vary depending on the concentration of the mixture, additives, or the spinning distance.

The method may further comprise a step of drying the interlayer. After the electrospinning is completed, it can be confirmed that the nanofiber-shaped interlayer is finally synthesized by drying in a vacuum oven.

Finally, a lithium metal anode is disposed at a lower part of the interlayer, and a separator and a cathode are sequentially disposed on an upper part of the interlayer, thereby being able to manufacture a lithium metal battery.

The polymer nanofiber structure and the polymer interlayer including the metal nitrate are manufactured through an electrospinning method. An additive that has low solubility and thus is difficult to apply to an electrolyte can be carried in large quantities through the polymer interlayer, and the carried additive slowly dissolves in the electrolyte and exerts its effect for a long time, which can improve the stability of the lithium metal when used in a lithium metal battery.

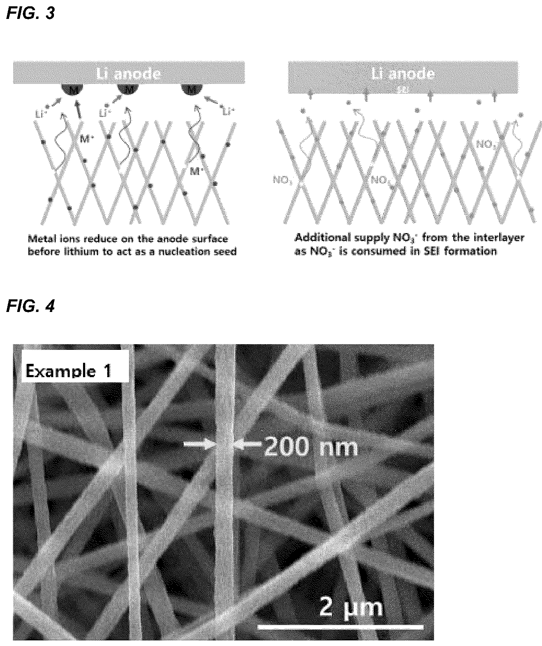

FIG. 3 is a schematic diagram of an expected effect when the produced interlayer is applied to a lithium metal battery.

Referring to FIG. 3, a solid electrolyte interphase(SEI) with improved ion conductivity can be formed by nitrate anions through decomposition of metal nitrate in the interlayer. Meanwhile, the metal cations through decomposition of metal nitrate in the interlayer may be reduced to a metal form on the lithium surface and act as nucleation seeds to thereby induce uniform lithium deposition.

When the interlayer is applied to a lithium metal anode in this manner, a stable SEI can be formed through decomposition of the metal nitrate, and the metal ion exhibits a uniform lithium deposition morphology according to its type.

On the other hand, although the lithium metal battery includes a lithium metal anode, it can follow the configuration of a typical lithium metal secondary battery, except that it includes an interlayer including the polymer nanofiber structure and the metal nitrate.

In this lithium metal battery, an electrolyte including a non-aqueous organic solvent and a lithium salt can be carried on the interlayer.

The lithium salt contained in the electrolyte is used as a medium for transferring ions within the secondary battery. For example, the lithium salt may include Li⁺ as a cation, and may together include an anion selected from the group consisting of F⁻, Cl⁻, Br, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, Lil, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBF₂(C₂O₄), LiBETI (lithium bis(perfluoroethanesulfonyl) imide, LiN(SO₂CF₂CF₃)₂) and LiTFSI (lithium bis(trifluoromethanesulfonyl) imide, LiN(SO₂CF₃)₂).

The concentration of the lithium salt can be appropriately changed within the normally usable range, and may be included in the electrolyte at a concentration of 0.4M to 6M, or at a concentration of 0.5M to 5M.

On the other hand, the kind of a non-aqueous organic solvent that can be included in the electrolyte is not particularly limited, and any organic solvent that has been known to be applicable to the electrolyte of a lithium ion battery can be used. Examples of such organic solvents include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate, methyl(2,2,2-trifluoroethyl)carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Further, the ether-based solvent may include dibutyl ether, tetraglyme, diglyme, dimethoxyethane, or a tetrahydrofuran derivative such as 2-methyltetrahydrofuran, and the nitrile-based solvent may include succinonitrile, adiponitrile, sebaconitrile, acetonitrile, propionitrile, or the like. Further, the sulfone-based solvent may include dimethyl sulfone, ethylmethyl sulfone, sulforane, or the like.

Meanwhile, in the lithium metal battery, the cathode may include a cathode current collector and a cathode active material layer positioned on the cathode current collector.

Such a cathode can be manufactured by mixing an active material and a binder, and optionally, a conductive material, a filler, or the like in a solvent to prepare a cathode slurry composition, and coating the slurry composition onto a cathode current collector.

The cathode current collector may typically have a thickness of 3 to 500 µm. The cathode current collector is not particularly limited as long as it has high conductivity without causing a chemical change in the battery, and for example, may be formed of stainless steel, aluminum, nickel, titanium, baked carbon, or a material formed by surface-treating a surface of aluminum or stainless steel with carbon, nickel, titanium, silver, or the like. The current collector may have fine protrusions and depressions formed on a surface thereof to enhance adherence of a cathode active material, and may be formed in various forms such as a film, a sheet, a foil, a net, a porous body, a foaming body, and a non-woven fabric structure.

Further, the cathode active material is a compound capable of reversible intercalation and deintercalation of lithium, and specifically, it may include lithium metal oxide containing lithium and at least one metal such as iron, cobalt, manganese, nickel or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5 ≤ a ≤ +0.5, 0 ≤ x ≤ 0.5, 0 ≤ b ≤ 0.1), or the like), and any one thereof or a mixture of two or more thereof may be used.

Among these, the cathode active material includes lithium; and lithium metal oxide containing two or more metals selected from the group consisting of nickel, manganese, cobalt, and aluminum, wherein the lithium metal oxide may contain nickel in an amount of 50 mol % or more, or 60 to 99 mol %, or 70 to 95 mol % based on the total metal content excluding lithium. Such a lithium metal oxide may be represented, for example, by the following Chemical Formula 1:

[Chemical Formula 1] LiₓNiₐCo_{b}M¹_{c}M²_{d}O₂

wherein in Chemical Formula 1, the M¹ may be one or more selected from Mn and Al, or a combination thereof, M² may be one or more selected from the group consisting of Zr, B, W, Mg, Ce, Hf, Ta, La, Ti, Sr, Ba, F, P and S, 0.90≤x≤1.1, or 0.95≤x≤1.08, or 1.0≤x≤1.08, and 0.50≤a<1.0, or 0.60≤a≤0.99, or 0.70≤a≤0.9. Further, 0<b≤0.3, 0<c≤0.3, and 0≤d≤0.1.

The lithium metal oxide containing such a high content of nickel is used as a cathode active material, and this is combined with the anode of one embodiment, so that the output, capacity characteristics, lifetime characteristics, etc. of the lithium metal battery can be further improved.

The above-mentioned cathode active material may be contained in an amount of 60 to 99 wt.%, or 70 to 99 wt.%, or 80 to 98 wt.%, based on the total weight of the cathode active material layer.

Meanwhile the conductive material contained in the cathode active material layer is a component for further improving the conductivity of the cathode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium metal battery and further enhance output characteristics.

Typically, the conductive material may be contained in an amount of 1 to 20 wt.%, or 1 to 15 wt.%, or 1 to 10 wt.%, based on the total weight of the cathode active material layer.

The binder selectively included in the cathode active material layer is a component that assists in the bonding between the cathode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20 wt.%, or 1 to 15 wt.%, or 1 to 10 wt.% based on the total weight of the cathode active material layer.

Meanwhile, the above-mentioned lithium metal battery may further include a porous separator interposed between the cathode and the anode.

Such a porous separator can be made of olefinic polymers such as polyethylene and polypropylene, glass fiber, etc. in the form of a sheet, a multilayer membrane, a microporous film, a woven fabric, and a nonwoven fabric, or the like, but is not necessarily limited thereto. However, it may be preferable to apply porous polyethylene or porous glass fiber non-woven fabric (glass filter) as a separator, and it may be more preferable to apply a porous glass filter (glass fiber non-woven fabric) as a separator. The separator may be an insulating thin film with high ion permeability and mechanical strength, and the pore diameter of the separator may generally range from 0.01 to 10 µm, and the thickness may generally range from 5 to 300 µm, but are not limited thereto.

Hereinafter, Examples, Comparative Examples and Experimental Examples of the present disclosure are described in detail below.

Comparative Example 1 shows a lithium metal battery using a carbonate electrolyte (1M LiPF₆ in EC/DEC/FEC) without an interlayer and a lithium metal anode. Example 1 shows a lithium metal battery including a PAN interlayer that does not contain a metal nitrate. Example 2 shows a lithium metal battery including a LiPAN nanofiber interlayer to which lithium nitrate is added as a metal nitrate. Example 3 shows a lithium metal battery including a RbPAN nanofiber interlayer to which rubidium nitrate is added as a metal nitrate.

### Comparative Example 1: Carbonate electrolyte without metal nitrate additive (1M LiPF₆ in EC/DEC/FEC, 45:45:10)

A commercially available 1M LiPF₆ in EC/DEC/FEC electrolyte, in which 10 vol.% of FEC was added to a lithium ion battery electrolyte (1M LiPF₆ in EC/DEC) having a conventional structure, was used.

### Example 1: Polymer nanofiber(PAN) interlayer without the addition of metal nitrates

7 wt.% of polyacrylonitrile(PAN) was mixed in DMF solvent and then stirred for 12 hours to prepare a completely dissolved mixture (PAN/DMF). The mixture was transferred to a Luer-Lock syringe equipped with an electrospinning needle. The electrospinning conditions were a voltage of 15-20 kV, a flow rate of 0.5-1 ml/hr, and a spinning distance of about 15 cm. The aluminum foil subjected to electrospinning was dried in a vacuum oven at a temperature of about 60°C under a vacuum atmosphere for 12 hours or more.

FIG. 4 illustrates a scanning electron microscope(SEM) analysis image according to Example 1. Referring to FIG. 4, it can be confirmed that a nanofiber-shaped interlayer was synthesized through the electrospinning method of the above Example.

### Example 2: LiPAN nanofiber interlayer

In Example 2, a polymer nanofiber(PAN) interlayer carrying with lithium nitrate (LiNO₃) was used as the interlayer in Example 1.

In Example 2, in the PAN-DMF mixture prepared in the same manner as in Example 1, lithium nitrate was further dissolved together with PAN in a weight ratio of 2:3 to prepare a mixture containing an additive (LiNO₃-PAN/DMF). In order to prevent moisture from being contained in the dissolution and dispersion process, the process was carried out in a glove box under an argon atmosphere, and the mixture was stirred for about 12 hours. The mixture was transferred to a Luer-Lock syringe equipped with an electrospinning needle. The electrospinning conditions were a voltage of 15-20 kV, a flow rate of 0.3-0.5 ml/hr, and a spinning distance of about 15 cm. The aluminum foil subjected to electrospinning was dried in a vacuum oven at a temperature of about 60°C under a vacuum atmosphere for 12 hours or more.

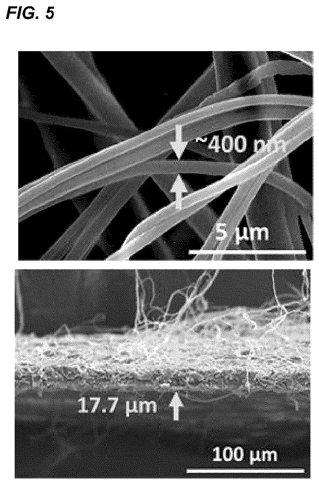

FIG. 5 illustrates a scanning electron microscope(SEM) analysis image according to Example 2. Referring to FIG. 5, it can be confirmed that a nanofiber-shaped interlayer was synthesized through the electrospinning method of Example 2, and that an interlayer uniformly carried with LiNO₃ was synthesized.

### Example 3: RbPAN nanofiber interlayer

In Example 3, the polymer nanofiber(PAN) interlayer carrying with rubidium nitrate (RbNO₃) was used as the interlayer in Example 1.

In Example 3, rubidium nitrate was subjected to a ball milling process through a stainless steel ball milling bottle and zirconia balls to reduce the particle size.

In Example 3, in the PAN-DMF mixture prepared in the same manner as in Example 1, RbPAN particles of about 5 µm obtained by a ball milling process for about 2 hours were dissolved and dispersed together with PAN in a weight ratio of about 1:1 in a DMF solvent. In order to prevent moisture from being contained in the dissolution and dispersion process, the process was carried out in a glove box under an argon atmosphere, and the mixture was stirred for about 12 hours. The PAN polymer was completely dissolved and the RbNO₃ particles were uniformly dispersed to prepare a suspension (RbNO₃-PAN/DMF).

After that, the particle dispersion degree of RbNO₃ was further increased through ultrasonic treatment. The prepared suspension was transferred to a Luer-Lock syringe equipped with an electrospinning needle. The electrospinning was carried out on an aluminum foil substrate in two stages. In order to prevent RbNO₃ particles from adhering to the aluminum foil, 1 ml of PAN/DMF solution was subjected to electrospinning in the first step. In the second step, about 6 ml of RbNO₃-PAN/DMF suspension was subjected to electrospinning. The electrospinning conditions were a voltage 15-20 kV, a flow rate of 0.5-1.0 ml/hr, and a spinning distance of about 15 cm.

The aluminum foil subjected to electrospinning was dried in a vacuum oven at a temperature of about 60°C under a vacuum atmosphere for 12 hours or more.

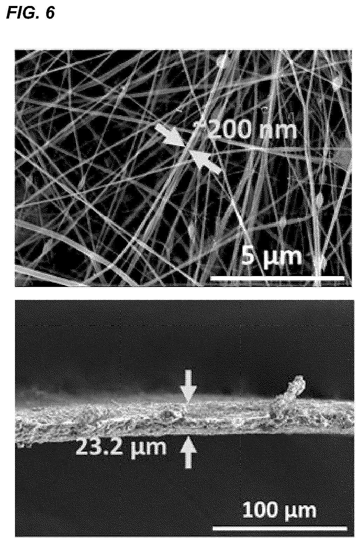

FIG. 6 illustrates a SEM analysis image of an interlayer(CsPAN) formed from a PAN nanofiber layer carried with CsNO₃ according to Example 3. Referring to FIG. 6, it can be confirmed that the nanofiber-shaped intermediate layer was synthesized by the electrospinning method of Example 3, and that the dispersed RbNO₃ particles were synthesized together uniformly.

### Experimental Example

Below, the electrochemical activity, etc. of the lithium metal battery of Comparative Example 1 and the lithium metal batteries using the interlayers of Examples 1 to 3 were evaluated. The lithium metal batteries using the interlayers of Examples 1-3 were fabricated using the carbonate electrolyte of the Comparative Example 1 together with the interlayers of Examples 1-3.

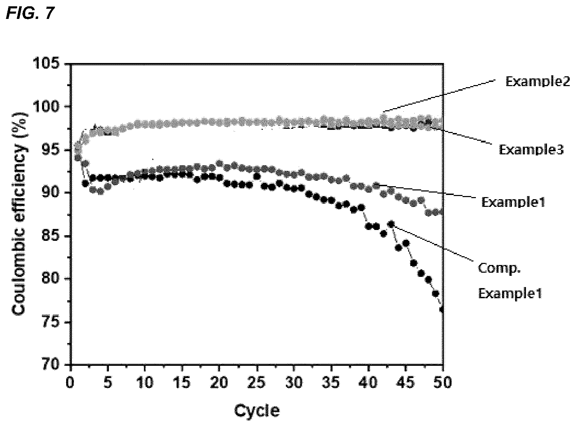

FIG. 7 is a graph showing the coulombic efficiency versus cycle of a half-cell cell to evaluate lithium reversibility according to Comparative Examples and Examples of the present disclosure. Referring to FIG. 7, the evaluation conditions were 1 mA·cm⁻² and 1 mAh·cm⁻², and the ratio of lithium deposition capacity versus desorption capacity was expressed as Coulomb efficiency. It can be seen that Comparative Example 1 and Example 1 have relatively low Coulomb efficiency and lifetime, and it can be confirmed that Examples 2 and 3 exhibit high Coulomb efficiency and excellent lifetime compared to Comparative Example 1 and Example 1.

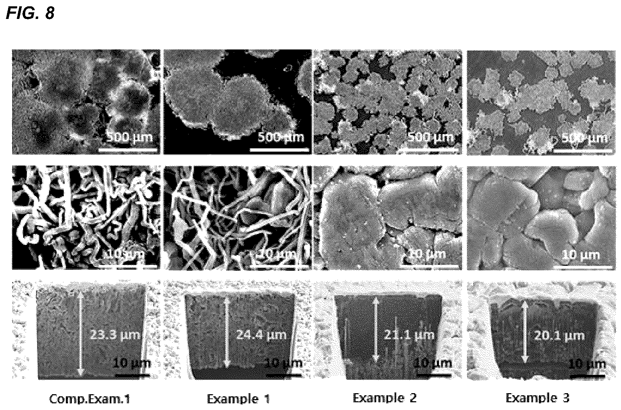

FIG. 8 is an image obtained through scanning electron microscopy and focused ion beam(FIB) cross-sectional analysis to evaluate the deposition morphology of lithium electrodes according to Comparative Examples and Examples of the present disclosure.

Referring to FIG. 8, it was confirmed that in Comparative Example 1 and Example 1, dendritic lithium is deposited on the localized surface, which also appears as a porous, thick lithium layer in the cross-sectional images. In the case of Examples 2 and 3, in which lithium nitrate or rubidium nitrate was added, it can be confirmed that a lithium deposition morphology with suppressed dendritic structures and a relatively thin lithium layer is formed accordingly.

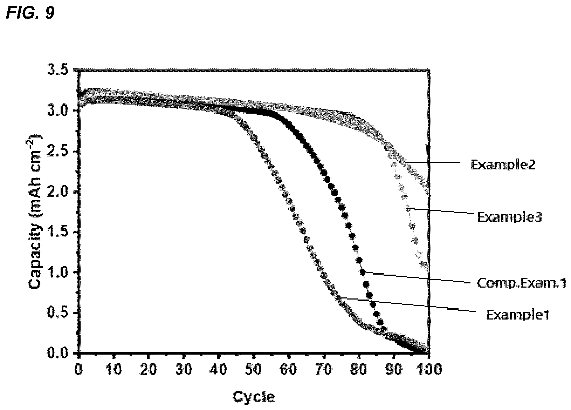

FIG. 9 is a result showing cycle versus capacity and coulombic efficiency for evaluating the overall battery performance according to Comparative Examples and Examples of the present disclosure.

At this time, the working electrode used was an NCM811 (LiNi_{0.8}Co_{0.1}Mn_{0.1}O₂) electrode, and the counter electrode and reference electrode used were 20µm lithium foil. The evaluation conditions were 1mA·cm⁻² (0.29C), and the charge and discharge tests were conducted under the conditions of a cut-off voltage of 3V to 4.3V.

Referring to FIG. 9, it can be confirmed that Examples 2 and 3 maintained high coulombic efficiency for 100 cycles and also maintained the capacity stably, and thus can be used even in full-cell.

The above description of the present disclosure is for illustration, and those of ordinary skill in the art to which the present disclosure pertains can understand that it can be easily modified into other specific forms without changing the technical spirit or essential features of the present disclosure. Therefore, it should be understood that the embodiments described above are illustrative in all respects and not restrictive. For example, each element described as a single type may be implemented in a distributed form, and likewise elements described as distributed may be implemented in a combined form.

The scope of the present disclosure is indicated by the following claims, and all changes or modifications derived from the meaning and scope of the claims and their equivalents should be construed as being included in the scope of the present disclosure.

## Claims

1. An electrolyte additive comprising:
a polymer nanofiber structure; and
a metal nitrate carried on the polymer nanofiber structure,
wherein the metal nitrate comprises lithium nitrate or rubidium nitrate.

2. The electrolyte additive according to claim 1, wherein the polymer nanofiber structure comprises at least one selected from the group consisting of polyvinylpyrrolidone(PVP), polyvinylidene fluoride(PVDF) and polyacrylonitrile(PAN).

3. The electrolyte additive according to claim 1, wherein the polymer nanofiber structure has a fiber diameter of 100 to 500 nm.

4. The electrolyte additive according to claim 1, wherein the metal nitrate is included in an amount of 10 to 70 wt.% based on the total weight of the electrolyte additive.

5. A lithium metal battery comprising:
a lithium metal anode;
a nanofiber-shaped interlayer positioned on the anode and produced from the electrolyte additive according to claim 1;
an electrolyte;
a separator positioned on the interlayer; and
a cathode positioned on the separator.

6. The lithium metal battery according to claim 5, wherein, on the interlayer, a solid electrolyte interphase(SEI) with improved ionic conductivity is formed by nitrate anions through decomposition of metal nitrate.

7. The lithium metal battery according to claim 5, wherein the interlayer has a thickness of 10 to 40 µm.

8. A manufacturing method of a lithium metal battery, comprising the steps of:
preparing an electrolyte additive which is a mixture of a polymer and a metal nitrate;
preparing an interlayer from the electrolyte additive; and
disposing a lithium metal anode at a lower part of the interlayer and sequentially disposing a separator and a cathode on an upper part of the interlayer.

9. The manufacturing method of a lithium metal battery according to claim 8, wherein in the step of preparing an electrolyte additive, a mixing weight ratio of the metal nitrate and the polymer is 1:2 to 3:1.

10. The manufacturing method of a lithium metal battery according to claim 8, wherein the step of preparing an interlayer is carried out by an electrospinning method.

11. The manufacturing method of a lithium metal battery according to claim 10, wherein the electrospinning method is carried out under application of a voltage of 8 kV to 25 kV.
